# EUROPÄISCHE PATENTSCHRIFT

(11) **EP 3 399 456 B1**
(45) Veröffentlichungstag und Bekanntmachung des Hinweises auf die Patenterteilung: **09.06.2021**
(21) Anmeldenummer: 18170185.5
(22) Anmeldetag: 30.04.2018
(51) Int. Cl.: G06F 21/60, G06F 21/72

(54) **ELEKTRISCHES GERÄT UND SPEICHERSYSTEM MIT EINEM ELEKTRISCHEN GERÄT**
ELECTRICAL APPARATUS AND STORAGE SYSTEM WITH AN ELECTRICAL APPARATUS
APPAREIL ÉLECTRIQUE ET SYSTÈME D'ACCUMULATION DOTÉ D'UN APPAREIL ÉLECTRIQUE

(30) Priorität: 03.05.2017 DE 102017109415
(43) Veröffentlichungstag der Anmeldung: 07.11.2018
(73) Patentinhaber: Krohne Messtechnik GmbH, 47058 Duisburg (DE)
(72) Erfinder: Glasmachers, Holger, 44795 Bochum (DE); Deilmann, Michael, 45257 Essen (DE)
(74) Vertreter: Gesthuysen Patentanwälte

(56) Entgegenhaltungen:
- EP-A1- 2 244 414
- US-A1- 2006 069 826
- US-A1- 2014 064 479

## Beschreibung

Die Erfindung betrifft ein elektrisches Gerät mit einer Funktionseinrichtung, wobei die Funktionseinrichtung in einen sicheren Funktionsblock und einen unsicheren Funktionsblock unterteilt ist. Die Funktionseinrichtung weist nur eine einzige Übertragungseinrichtung zur Übertragung von Informationen ausschließlich vom sicheren Funktionsblock in den unsicheren Funktionsblock auf. Weiter weist die Funktionseinrichtung eine erste Schnittstelleneinrichtung auf, wobei die erste Schnittstelleneinrichtung im unsicheren Funktionsblock angeordnet ist

Das Patent EP2244414 beschreibt ein Gerät, das als nächster Stand der Technik angesehen wird.

Darüber hinaus betrifft die Erfindung auch ein Speichersystem mit einem elektrischen Gerät und einem unsicheren Speichergerät.

Elektrische Geräte werden zum Beispiel in industriellen Anlagen zur Umsetzung vielfältiger Funktionen eingesetzt. Die Funktionseinrichtung eines solchen Geräts weist geeignete Hardware und/oder Software zur Umsetzung der Funktionen auf. Die Umsetzung der Funktionen erfordert für gewöhnlich die Verarbeitung und Übertragung von Informationen. Bei diesen Informationen kann es sich auch um sensible Informationen handeln, weshalb diese sensiblen Informationen vor dem Zugriff durch unautorisierte Personen zu schützen sind.

Die Funktionseinrichtung ist in den sicheren und in den unsicheren Funktionsblock unterteilt, wobei die erste Schnittstelleneinrichtung im unsicheren Funktionsblock angeordnet ist. Die Unterteilung in die Funktionsblöcke ist eine funktionale Aufteilung der Funktionseinrichtung. Entsprechend ist jedem der Funktionsblöcke die Hardware und/oder Software der Funktionseinrichtung zugeordnet, welche zur Umsetzung der jeweiligen Funktionen erforderlich ist. Im gegebenen Kontext bedeutet "sicher", zum Beispiel in Verbindung mit einem Funktionsblock, dass sensible Informationen vor dem Zugriff durch unautorisierte Personen geschützt sind, wodurch der Zugriff jedenfalls erschwert und im Idealfall unmöglich ist. Im Umkehrschluss bedeutet "unsicher", dass sensible Informationen nicht weiter vor dem Zugriff durch unautorisierte Personen geschützt sind.

Die Funktionseinrichtung und damit das elektrische Gerät weist nur die eine Übertragungseinrichtung auf. Diese Übertragungseinrichtung ist ausgebildet, Informationen ausschließlich vom sicheren Funktionsblock in den unsicheren Funktionsblock zu übertragen. Eine Übertragung in die umgekehrte Richtung ist nicht umgesetzt. Die Übertragungseinrichtung gewährleistet, dass über die erste Schnittstelle nur auf Informationen im unsicheren Funktionsblock und nicht auf Informationen im sicheren Funktionsblock von unautorisierten Personen zugegriffen werden kann, wodurch der sichere Funktionsblock sicher und der unsichere Funktionsblock unsicher wird.

In der Industrie gibt es das Bestreben, elektrische Geräte in industriellen Anlagen und Geräte der Informations- und Kommunikationstechnik zum Austausch von Informationen miteinander zu verbinden. Dadurch soll ermöglicht werden, die Abläufe in industriellen Anlagen weiter zu optimieren. Bestrebungen in diese Richtung werden auch mit dem Schlagwort "Industrie 4.0" bezeichnet. Durch die Verbindung von Geräten in industriellen Anlagen mit Geräten der Informations- und Kommunikationstechnik ist jedoch auch unautorisierten Personen der Zugriff auf Informationen in unsicheren Bereichen, wie zum Beispiel dem unsicheren Funktionsblock, leichter als bisher möglich.

Eine Aufgabe der vorliegenden Erfindung ist deshalb die Angabe eines elektrischen Geräts und eines Speichersystems mit einem elektrischen Gerät, bei dem der Zugriff auf Informationen in unsicheren Bereichen für unautorisierte Personen zumindest erschwert ist.

Die dargelegte Aufgabe ist bei einem elektrischen Gerät gemäß einer ersten Lehre zunächst und im Wesentlichen dadurch gelöst, dass im sicheren Funktionsblock der Funktionseinrichtung ein Schlüssel gespeichert ist, dass zum einen der sichere Funktionsblock ausgebildet ist, einer Bedeutung unter Verwendung des Schlüssels eine Kennung zuzuordnen, ein Wertepaar aus der Kennung und einem Wert zu bilden und das Wertepaar über die Übertragungseinrichtung in den unsicheren Funktionsblock zu übertragen und dass zum anderen der unsichere Funktionsblock ausgebildet ist, das Wertepaar über die erste Schnittstelle zu übertragen.

Die dargelegte Aufgabe ist bei einem elektrischen Gerät gemäß einer zweiten Lehre zunächst und im Wesentlichen dadurch gelöst, dass im sicheren Funktionsblock ein Schlüssel gespeichert ist, dass zum einen der sichere Funktionsblock ausgebildet ist, eine Bedeutung und/oder einen Wert unter Verwendung des Schlüssels zu verschlüsseln und die verschlüsselte Bedeutung und/oder den verschlüsselten Wert über die Übertragungseinrichtung in den unsicheren Funktionsblock zu übertragen und dass zum anderen der unsichere Funktionsblock ausgebildet ist, die verschlüsselte Bedeutung und/oder den verschlüsselten Wert über die erste Schnittstelle zu übertragen. Weiter ist der sichere Funktionsblock ausgebildet, die Bedeutung oder den Wert, der nicht verschlüsselt ist, ebenfalls über die Übertragungseinrichtung in den unsicheren Funktionsblock zu übertragen und ist der unsichere Funktionsblock ausgebildet, die Bedeutung oder den Wert, der nicht verschlüsselt ist, über die erste Schnittstelle zu übertragen.

Der Schlüssel ist gemäß beider Lehren, also gemäß sowohl der ersten als auch der zweiten Lehre, im sicheren Funktionsblock der Funktionseinrichtung gespeichert, wodurch er vor dem Zugriff durch unautorisierte Personen geschützt ist. Jedoch unterscheidet sich der Schlüssel gemäß der ersten Lehre von dem Schlüssel gemäß der zweiten Lehre. Denn der Schlüssel gemäß der ersten Lehre ordnet einer Bedeutung eine Kennung zu, wohingegen der Schlüssel gemäß der zweiten Lehre eine Bedeutung und/oder einen Wert verschlüsselt. Zwar ist in den erfindungsgemäßen Lehren nur von einem Schlüssel die Rede, jedoch sind die Lehren keinesfalls auf einen Schlüssel begrenzt, sondern können auch mehrere Schlüssel analog zu einem Schlüssel Anwendung finden.

Der Schlüssel gemäß der ersten Lehre ordnet einer Bedeutung eine Kennung zu und bildet ein Wertepaar aus der Kennung und einem Wert. Für gewöhnlich erläutert die Bedeutung den Wert, sodass der Wert gedeutet werden kann. So handelt es sich bei dem Wert zum Beispiel um eine Zahl und die Bedeutung erläutert, dass es sich bei dieser Zahl um eine Spannung handelt und die Einheit der Spannung Volt ist. Der Schlüssel ordnet der Bedeutung eine Kennung zu, sodass sich unautorisierten Personen bei Zugriff auf das Wertepaar nicht die Bedeutung des Werts erschließt. Die Kennung erlaubt somit keine Rückschlüsse auf die Bedeutung des Werts. Demnach anonymisiert der Schlüssel das Wertepaar. Zwar ist in der ersten Lehre nur die Rede von der Zuordnung von einer Bedeutung zu einer Kennung durch einen Schlüssel, jedoch können in einem Schlüssel auch mehrere Zuordnungen jeweils von einer Bedeutung zu einer Kennung hinterlegt sein.

Durch den Schlüssel gemäß der zweiten Lehre werden bzw. wird die Bedeutung und/oder der Wert verschlüsselt, weshalb die Bedeutung und/oder der Wert für unautorisierte Personen nach erlangtem Zugriff keinerlei Bedeutung haben bzw. hat. Die Verschlüsselung gemäß der zweiten Lehre geht somit über die Anonymisierung gemäß der ersten Lehre in Bezug auf die Erschwerung eines Zugriffs durch unautorisierte Personen hinaus. Bei dem Schlüssel gemäß der zweiten Lehre handelt es sich für gewöhnlich um einen kryptografischen Schlüssel, wie er zum Beispiel bei SSL verwendet wird. Somit umfasst die zweite Lehre die Umsetzung eines kryptografischen Verfahrens.

In einer Ausgestaltung der ersten Lehre ist vorgesehen, dass der sichere Funktionsblock zusätzlich ausgebildet ist, das Wertepaar oder die Bedeutung oder den Wert unter Verwendung eines kiyptografischen Verfahrens zu verschlüsseln. Bei dem kryptografischen Verfahren handelt es sich zum Beispiel um eines gemäß der zweiten Lehre, wonach das Wertepaar oder die Bedeutung oder der Wert verschlüsselt wird.

Gemäß den beiden Lehren ist der unsichere Funktionsblock ausgebildet, das Wertepaar bzw. die Bedeutung und/oder den Wert über die erste Schnittstelle zu einem Empfangsgerät zu übertragen, wobei es sich bei dem Empfangsgerät insbesondere um ein unsicheres Empfangsgerät und auch bei der Verbindung zwischen dem unsicheren Funktionsblock und dem Empfangsgerät um eine unsichere Verbindung handeln kann. Dabei hat "unsicher" auch hier die zuvor beschriebene Bedeutung. Zwar ist in den erfindungsgemäßen Lehren nur von einem Wertepaar bzw. einer Bedeutung und/oder einem Wert die Rede, jedoch sind die Lehren keinesfalls auf ein Wertepaar bzw. eine Bedeutung und/oder einen Wert begrenzt, sondern können auf auch mehrere Wertepaare bzw. Bedeutungen und/oder Werte analog zu einem Wertepaar bzw. einer Bedeutung und/oder einem Wert Anwendung finden. Ein Wertepaar bzw. eine Bedeutung und/oder ein Wert enthält dabei eine Information, welche sensibel sein kann.

Der Zugriff auf Informationen im unsicheren Funktionsbereich durch unautorisierte Personen ist nach der ersten Lehre durch Anonymisierung und nach der zweiten Lehre durch Verschlüsselung jedenfalls erschwert. Mit Zugriff auf Informationen ist nicht der Zugriff auf das Wertepaar bzw. die Bedeutung und/oder den Wert selbst, sondern auf die Information in dem Wertepaar bzw. der Bedeutung und/oder dem Wert gemeint. Diese Information erschließt sich erst, wenn die Bedeutung des Werts in dem Wertepaar bzw. des Werts bekannt ist. Dazu besitzen autorisierte Personen einen inversen Schlüssel zum Schlüssel, sodass sie der Kennung wieder die Bedeutung zuordnen bzw. die Bedeutung und/oder den Wert entschlüsseln können.

In einer Ausgestaltung des elektrischen Geräts ist vorgesehen, dass die Übertragungseinrichtung aktivierbar und deaktivierbar ist und dass der sichere Funktionsblock zur Aktivierung und Deaktivierung der Übertragungseinrichtung ausgebildet ist. Durch die Aktivier- und Deaktivierbarkeit der Übertragungseinrichtung wird die Unterteilung der Funktionseinrichtung in den sicheren Funktionsblock und in den unsicheren Funktionsblock verstärkt, wodurch die Sicherheit des elektrischen Geräts vor einem Zugriff auf Informationen durch unautorisierte Personen verbessert ist.

In einer weiteren Ausgestaltung ist vorgesehen, dass die Funktionseinrichtung eine zweite Schnittstelleneinrichtung aufweist und dass die zweite Schnittstelleneinrichtung im sicheren Funktionsblock angeordnet ist. Während die erste Schnittstelleneinrichtung im unsicheren Funktionsblock angeordnet ist, ist die zweite Schnittstelleneinrichtung im sicheren Funktionsblock angeordnet und dient dementsprechend zur Übertragung von Informationen mit einem sicheren Empfangsgerät. Sichere Empfangsgeräte sind zum Beispiel Empfangsgeräte innerhalb einer industriellen Anlage, bei denen der Zugriff durch unautorisierte Personen erschwert ist. Dazu zählen insbesondere speicherprogrammierbare Steuerungen in industriellen Anlagen.

Wenn die Funktionseinrichtung eine zweite Schnittstelleneinrichtung aufweist und die zweite Schnittstelleneinrichtung im sicheren Funktionsblock angeordnet ist, dann ist es weiterhin vorteilhaft, wenn der sichere Funktionsblock ausgebildet ist, den Schlüssel über die zweite Schnittstelleneinrichtung zu empfangen und im sicheren Funktionsblock abzuspeichern. Somit ist der im sicheren Funktionsblock abgespeicherte Schlüssel auf einfache Weise vorgebbar und änderbar.

In einer weiteren Ausgestaltung ist vorgesehen, dass das elektrische Gerät ein Feldgerät ist. Feldgeräte werden insbesondere in industriellen Anlagen zur Prozessautomation eingesetzt. Die Prozessautomation ist mit der Automatisierung von industriellen Prozessen, wie zum Beispiel Herstellungsprozessen, befasst. Solche Prozesse werden unter anderem durch Aktoren gesteuert und durch Sensoren überwacht. Aktoren sind zum Beispiel Stellglieder und Ventile. Sensoren sind zum Beispiel Durchfluss-, Füllstands-, Temperatur-, Druck-, Analyse-, Gas- und Dampfmessgeräte. Solche Aktoren und Sensoren sind vorzugsweise als Feldgeräte ausgebildet, wobei Feldgeräte eine Schnittstelleneinrichtung zur Übertragung von Informationen aufweisen. Bei der Schnittstelleneinrichtung handelt es sich zum Beispiel um eine sichere oder unsichere Schnittstelleneinrichtung.

Wenn das elektrische Gerät ein Feldgerät ist, ist es weiterhin vorteilhaft, wenn die Funktionseinrichtung eine Messeinrichtung aufweist und die Messeinrichtung im sicheren Funktionsblock angeordnet ist. Dadurch erfolgt die Verarbeitung der Informationen, die von der Messeinrichtung generiert werden, und die Steuerung der Messeinrichtung im sicheren Funktionsblock, wodurch der Zugriff darauf durch unautorisierte Personen erschwert ist.

Die Erfindung betrifft - wie bereits ausgeführt worden ist - darüber hinaus auch ein Speichersystem mit einem zuvor beschriebenen elektrischen Gerät und einem unsicheren Speichergerät in Form eines Empfangsgeräts.

Die dargelegte Aufgabe ist bei einem Speichersystem gemäß einer dritten Lehre zunächst und im Wesentlichen dadurch gelöst, dass das elektrische Gerät über die erste Schnittstelleneinrichtung mit dem Speichergerät zum Austausch von Informationen verbunden ist und dass das Speichergerät zur Speicherung des Wertepaars bzw. der Bedeutung und/oder des Werts ausgebildet ist. Zwar ist in der erfindungsgemäßen Lehre nur vom Abspeichern eines Wertepaars bzw. einer Bedeutung und/oder einer Kennung die Rede, jedoch ist die Lehre keinesfalls auf ein Wertepaar bzw. eine Bedeutung und/oder eine Kennung begrenzt, sondern können auch mehrere Wertepaare bzw. Bedeutungen und/oder Kennungen analog zu einem Wertepaar bzw. einer Bedeutung und/oder Kennung abgespeichert werden.

Bei dem unsicheren Speichergerät handelt es sich zum Beispiel um ein Cloud-Speichergerät. Cloud-Speichergeräte sind unsicher, da sie für gewöhnlich außerhalb einer industriellen Anlage angeordnet sind, wodurch ein Zugriff von unautorisierten Personen einfacher möglich ist als bei einem innerhalb einer industriellen Anlage angeordneten Speichergerät. In Bezug auf das elektrische Gerät gelten im Übrigen die vorstehenden Ausführungen.

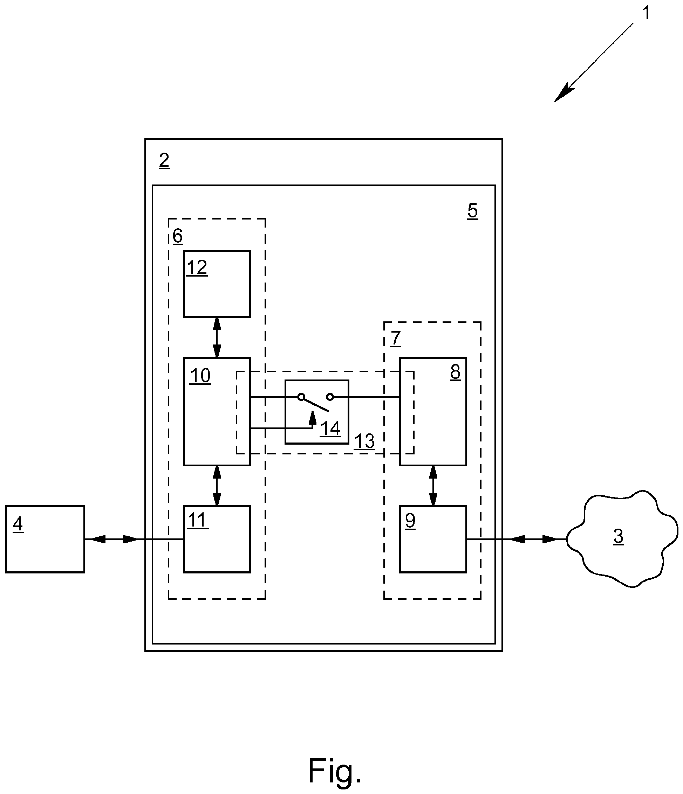

Im Einzelnen ist eine Vielzahl von Möglichkeiten gegeben, das elektrische Gerät und das Speichersystem auszugestalten und weiterzubilden. Dazu wird verwiesen sowohl auf die den unabhängigen Patentansprüchen nachgeordneten Patentansprüche als auch auf die nachfolgende Beschreibung eines bevorzugten Ausführungsbeispiels in Verbindung mit der Figur.

Die Figur zeigt abstrahiert und schematisch das Speichersystem 1. Das Speichersystem 1 umfasst das elektrische Gerät 2, das unsichere Speichergerät 3 in Form eines Cloud-Speichergeräts und die Leitwarte 4.

Das elektrische Gerät 2 weist die Funktionseinrichtung 5 auf. Die Funktionseinrichtung 5 ist in den sicheren Funktionsblock 6 und in den unsicheren Funktionsblock 7 unterteilt. Der unsichere Funktionsblock 7 weist die erste Steuerungseinrichtung 8 und die erste Schnittstelleneinrichtung 9 auf. Der sichere Funktionsblock 6 weist neben der zweiten Steuerungseinrichtung 10 und der zweiten Schnittstelleneinrichtung 11 auch noch die Messeinrichtung 12 auf. Weiter weist die Funktionseinrichtung 5 die einzige Übertragungseinrichtung 13 zur Übertragung von Informationen vom sicheren Funktionsblock 6 in den unsicheren Funktionsblock 7 auf. Somit gehört die Übertragungseinrichtung 13 teilweise sowohl zum sicheren Funktionsblock 6 als auch zum unsicheren Funktionsblock 7.

Die erste Steuerungseinrichtung 8 und die erste Schnittstelleneinrichtung 9 sind über eine Verbindung miteinander verbunden und über diese Verbindung zum bidirektionalen Austausch von Informationen ausgebildet. Weiter sind die erste Schnittstelleneinrichtung 9 und das unsichere Speichergerät 3 über eine Verbindung miteinander verbunden und zum bidirektionalen Austausch von Informationen über diese Verbindung ausgebildet.

Entsprechend sind die zweite Steuerungseinrichtung 10 und die zweite Schnittstelleneinrichtung 11 über eine Verbindung miteinander verbunden und zur bidirektionalen Übertragung von Informationen über diese Verbindung ausgebildet. Weiterhin sind die zweite Schnittstelleneinrichtung 11 und die Leitwarte 4 über eine Verbindung miteinander verbunden und zur bidirektionalen Übertragung von Informationen über diese Verbindung ausgebildet.

Die Übertragungseinrichtung 13 weist den steuerbaren Schalter 14 auf, durch welchen die Übertragungseinrichtung 13 aktivierbar und deaktivierbar ist. Wenn der Schalter 14 geschlossen ist, ist die Übertragungseinrichtung 13 aktiv und wenn der Schalter 14 geöffnet ist, ist die Übertragungseinrichtung 13 inaktiv. Nur wenn die Übertragungseinrichtung 13 aktiv ist, also der Schalter 14 geschlossen ist, können überhaupt Informationen vom sicheren Funktionsblock 6 in den unsicheren Funktionsblock 7 übertragen werden. Auch wenn die Übertragungseinrichtung 13 aktiv ist, ist keine Übertragung von Informationen von dem unsicheren Funktionsblock 7 in den sicheren Funktionsblock 6 möglich. Der steuerbare Schalter 14 wird vom sicheren Funktionsblock 6 aus durch die zweite Steuerungseinrichtung 10 gesteuert. Die Steuerungseinrichtung 10 ist entsprechend zur Aktivierung und Deaktivierung der Übertragungseinrichtung 13 ausgebildet.

Die Messeinrichtung 12 ist in diesem Ausführungsbeispiel eine Temperaturmesseinrichtung. Sie misst eine Temperatur an einer Stelle in der Einheit Celsius. Die zweite Steuerungseinrichtung 10 steuert die Messeinrichtung 12 und liest eine gemessene Temperatur als einen Wert über die entsprechende Verbindung ein. In der zweiten Steuerungseinrichtung 10 ist die Bedeutung hinterlegt, dass es sich bei der Messeinrichtung 12 um eine Temperaturmesseinrichtung an einer bestimmten Stelle handelt und dass die Temperatur in Celsius gemessen wird.

Die Leitwarte 4 überträgt über die zweite Schnittstelleneinrichtung 11 an die zweite Steuerungseinrichtung 10 einen Schlüssel, der in der zweiten Steuerungseinrichtung 10 und damit im sicheren Funktionsblock abgespeichert wird. Der Schlüssel ordnet in diesem Ausführungsbeispiel der gegebenen Bedeutung eine Kennung zu. Die zweite Steuerungseinrichtung 10 ist entsprechend ausgebildet, der gegebenen Bedeutung unter Verwendung des Schlüssels die Kennung zuzuordnen, ein Wertepaar aus der Kennung und dem Wert zu bilden und das Wertepaar über die Übertragungseinrichtung 13 in den unsicheren Funktionsblock 7 zu übertragen. Zur Übertragung aktiviert die zweite Steuerungseinrichtung 10 dabei die Übertragungseinrichtung 13. Durch die Übertragung der Kennung und nicht der Bedeutung, ist der Wert anonymisiert, sodass unautorisierte Personen dem Wertepaar keine sinnvollen Informationen entnehmen können.

In einem zum vorstehenden Ausführungsbeispiel abgewandelten Ausführungsbeispiel ist der Schlüssel ein kryptografischer Schlüssel. Die Steuerungseinrichtung 10 ist dann ausgebildet, ein Wertepaar aus der gegebenen Bedeutung und dem Wert zu bilden, das Wertepaar, also sowohl die Bedeutung als auch den Wert, unter Verwendung des Schlüssels zu verschlüsseln und dann das verschlüsselte Wertepaar über die Übertragungseinrichtung 13 in den unsicheren Funktionsblock 7 zu übertragen.

Die erste Steuerungseinrichtung 8 im unsicheren Funktionsblock 7 ist sowohl im Ausführungsbeispiel als auch im abgewandelten Ausführungsbeispiel ausgebildet, das übertragene Wertepaar über die erste Schnittstelleneinrichtung 9 zum unsicheren Speichergerät 3 zu übertragen. Das unsichere Speichergerät 3 speichert das Wertepaar dann ab.

Autorisierte Personen besitzen einen inversen Schlüssel zum Schlüssel, sodass sie über das unsichere Speichergerät 3 nicht nur Zugriff auf das Wertepaar haben, sondern auch der Kennung wieder die Bedeutung zuordnen bzw. die Bedeutung und den Wert entschlüsseln können.

### Bezugszeichen

- 1: Speichersystem
- 2: Elektrisches Gerät
- 3: Unsicheres Speichergerät
- 4: Leitwarte
- 5: Funktionseinrichtung
- 6: Sicherer Funktionsblock
- 7: Unsicherer Funktionsblock
- 8: Erste Steuerungseinrichtung
- 9: Erste Schnittstelleneinrichtung
- 10: Zweite Steuerungseinrichtung
- 11: Zweite Schnittstelleneinrichtung
- 12: Messeinrichtung
- 13: Übertragungseinrichtung
- 14: Steuerbarer Schalter

## Patentansprüche

1. Elektrisches Gerät (2) mit einer Funktionseinrichtung (5),
wobei die Funktionseinrichtung (5) in einen sicheren Funktionsblock (6) und einen unsicheren Funktionsblock (7) unterteilt ist,
wobei die Funktionseinrichtung (5) eine einzige Übertragungseinrichtung (13) aufweist,
wobei die Übertragungseinrichtung (13) ausgebildet ist, Informationen ausschließlich vom sicheren Funktionsblock (6) in den unsicheren Funktionsblock (7) zu übertragen und
wobei die Funktionseinrichtung (5) eine erste Schnittstelleneinrichtung (9) aufweist und die erste Schnittstelleneinrichtung (9) im unsicheren Funktionsblock (7) angeordnet ist,
mit den weiteren Merkmalen, dass im sicheren Funktionsblock (6) ein Schlüssel gespeichert ist,
dass der sichere Funktionsblock (6) ausgebildet ist, einer Bedeutung unter Verwendung des Schlüssels eine Kennung zuzuordnen, ein Wertepaar aus der Kennung und einem Wert zu bilden und das Wertepaar über die Übertragungseinrichtung (13) in den unsicheren Funktionsblock (7) zu übertragen und
dass der unsichere Funktionsblock (7) ausgebildet ist, das Wertepaar über die erste Schnittstelle (9) zu übertragen.

2. Elektrisches Gerät nach Anspruch 1, **dadurch gekennzeichnet, dass** der sichere Funktionsblock ausgebildet ist, das Wertepaar oder die Bedeutung oder der Wert unter Verwendung eines kryptografischen Verfahrens zu verschlüsseln

3. Elektrisches Gerät (2) mit einer Funktionseinrichtung (5),
wobei die Funktionseinrichtung (5) in einen sicheren Funktionsblock (6) und einen unsicheren Funktionsblock (7) unterteilt ist,
wobei die Funktionseinrichtung (5) eine einzige Übertragungseinrichtung (13) aufweist,
wobei die Übertragungseinrichtung (13) ausgebildet ist, Informationen ausschließlich vom sicheren Funktionsblock (6) in den unsicheren Funktionsblock (7) zu übertragen und
wobei die Funktionseinrichtung (5) eine erste Schnittstelleneinrichtung (9) aufweist und die erste Schnittstelleneinrichtung (9) im unsicheren Funktionsblock (7) angeordnet ist,
mit den weiteren Merkmalen, dass im sicheren Funktionsblock (6) ein Schlüssel gespeichert ist,
dass der sichere Funktionsblock (6) ausgebildet ist, eine Bedeutung und/oder einen Wert unter Verwendung des Schlüssels zu verschlüsseln und die verschlüsselte Bedeutung und/oder den verschlüsselten Wert über die Übertragungseinrichtung (13) in den unsicheren Funktionsblock (7) zu übertragen und
dass der unsichere Funktionsblock (7) ausgebildet ist, die verschlüsselte Bedeutung und/oder den verschlüsselten Wert über die erste Schnittstelle (9) zu übertragen.

4. Elektrisches Gerät (2) nach einem der Ansprüche 1 bis 3, **dadurch gekennzeichnet, dass** die Übertragungseinrichtung (13) aktivierbar und deaktivierbar ist und dass der sichere Funktionsblock (6) zur Aktivierung und Deaktivierung der Übertragungseinrichtung (13) ausgebildet ist.

5. Elektrisches Gerät (2) nach einem der Ansprüche 1 bis 4, **dadurch gekennzeichnet, dass** die Funktionseinrichtung (5) eine zweite Schnittstelleneinrichtung (11) aufweist und dass die zweite Schnittstelleneinrichtung (11) im sicheren Funktionsblock (6) angeordnet ist.

6. Elektrisches Gerät (2) nach Anspruch 5, **dadurch gekennzeichnet, dass** der sichere Funktionsblock (6) ausgebildet ist, den Schlüssel über die zweite Schnittstelleneinrichtung (11) zu empfangen und im sicheren Funktionsblock (6) abzuspeichern.

7. Elektrisches Gerät (2) nach einem der Ansprüche 1 bis 6, **dadurch gekennzeichnet, dass** das elektrische Gerät (2) ein Feldgerät ist.

8. Elektrisches Gerät (2) nach Anspruch 7, **dadurch gekennzeichnet, dass** die Funktionseinrichtung (5) eine Messeinrichtung (12) aufweist und die Messeinrichtung (12) im sicheren Funktionsblock (6) angeordnet ist.

9. Speichersystem (1) mit einem elektrischen Gerät (2) nach einem der Ansprüche 1 bis 8 und einem unsicheren Speichergerät (3),
**dadurch gekennzeichnet,**
**dass** das elektrische Gerät (2) über die erste Schnittstelleneinrichtung (9) und das Speichergerät (3) zum Austausch von Informationen miteinander verbunden sind und
**dass** das Speichergerät (3) zur Speicherung des Wertepaars bzw. der Bedeutung und/oder des Werts ausgebildet ist.

## Claims

1. Electrical device (2) with a functional unit (5),
wherein the functional unit (5) is subdivided into a secure functional block (6) and an non-secure functional block (7),
wherein the functional unit (5) has a single transmission device (13), wherein the transmission device (13) is designed for transmitting information only from the secure functional block (6) into the non-secure functional block (7), and
wherein the functional unit (5) has a first interface device (9) and the first interface device (9) is arranged in the non-secure functional block (7),
with the further features
that a key is stored in the secure functional block (6),
that the secure functional block (6) is designed to assign a meaning to an identifier using the key, to form a value pair from the identifier and a value, and to transmit the value pair to the non-secure functional block (7) via the transmission device (13), and
that the non-secure functional block (7) is designed to transmit the value pair via the first interface (9).

2. Electrical device according to claim 1, **characterized in that** the secure functional block is designed to encrypt the value pair or the meaning or the value using a cryptographic method.

3. Electrical device (2) with a functional unit (5),
wherein the functional unit (5) is subdivided into a secure functional block (6) and an non-secure functional block (7),
wherein the functional unit (5) has a single transmission device (13)
wherein the transmission device (13) is designed for transmitting information only from the secure functional block (6) into the non-secure functional block (7), and
wherein the functional unit (5) has a first interface device (9) and the first interface device (9) is arranged in the non-secure functional block (7),
with the further features
that a key is stored in the secure functional block (6),
that the secure functional block (6) is designed to encrypt a meaning and/or a value using the key and to transmit the encrypted meaning and/or the encrypted value via the transmission device (13) into the non-secure functional block (7) and
that the non-secure functional block (7) is designed to transmit the encrypted meaning and/or the encrypted value via the first interface (9).

4. Electrical device (2) according to any one of claims 1 to 3, **characterized in that** the transmission device (13) can be activated and deactivated and that the secure functional block (6) is designed for activating and deactivating the transmission device (13).

5. Electrical device (2) according to any one of claims 1 to 4, **characterized in that** the functional unit (5) has a second interface device (11) and that the second interface device (11) is arranged in the secure functional block (6).

6. Electrical device (2) according to claim 5, **characterized in that** the secure functional block (6) is designed to receive the key via the second interface device (11) and store it in the secure functional block (6).

7. Electrical device (2) according to any one of claims 1 to 6, **characterized in that** the electrical device (2) is a field device.

8. Electrical device (2) according to claim 7, **characterized in that** the functional unit (5) has a measuring device (12) and the measuring device (12) is arranged in the secure functional block (6).

9. Storage system (1) with an electrical device (2) according to any one of claims 1 to 8 and an non-secure storage device (3),
**characterized in**
**that** the electrical device (2) and the storage device (3) are connected to one another via the first interface device (9) for exchanging information, and
**that** the storage device (3) is designed to store the value pair or the meaning and/or the value.

## Revendications

1. Appareil électrique (2) comprenant un dispositif fonctionnel (5),
le dispositif fonctionnel (5) étant divisé en un bloc fonctionnel sécurisé (6) et un bloc fonctionnel non-sécurisé (7),
le dispositif fonctionnel (5) comportant un seul dispositif de transmission (13),
le dispositif de transmission (13) étant conçu pour transmettre des informations exclusivement du bloc fonctionnel sécurisé (6) au bloc fonctionnel non-sécurisé (7) et
le dispositif fonctionnel (5) comportant un premier dispositif d'interface (9) et le premier dispositif d'interface (9) étant disposé dans le bloc fonctionnel non-sécurisé (7),
l'appareil électrique comprenant les autres fonctionnalités selon lesquelles
une clé est mémorisée dans le bloc fonctionnel sécurisé (6),
le bloc fonctionnel sécurisé (6) est conçu pour associer un identifiant à une signification à l'aide de la clé, former une paire de valeurs à partir de l'identifiant et d'une valeur et transmettre la paire de valeurs au bloc fonctionnel non-sécurisé (7) par le biais du dispositif de transmission (13) et
le bloc fonctionnel non-sécurisé (7) est conçu pour transmettre la paire de valeurs par le biais de la première interface (9).

2. Appareil électrique selon la revendication 1, **caractérisé en ce que** le bloc fonctionnel sécurisé est conçu pour crypter la paire de valeurs ou la signification ou la valeur à l'aide d'un procédé cryptographique.

3. Appareil électrique (2) comprenant un dispositif fonctionnel (5),
le dispositif fonctionnel (5) étant divisé en un bloc fonctionnel sécurisé (6) et un bloc fonctionnel non-sécurisé (7),
le dispositif fonctionnel (5) comportant un seul dispositif de transmission (13),
le dispositif de transmission (13) étant conçu pour transmettre des informations exclusivement du bloc fonctionnel sécurisé (6) au bloc fonctionnel non-sécurisé (7) et
le dispositif fonctionnel (5) comportant un premier dispositif d'interface (9) et le premier dispositif d'interface (9) étant disposé dans le bloc fonctionnel non-sécurisé (7),
l'appareil comprenant les autres fonctionnalités selon lesquelles
une clé est mémorisée dans le bloc fonctionnel sécurisé (6),
le bloc fonctionnel sécurisé (6) est conçu pour crypter une signification et/ou une valeur à l'aide de la clé et transmettre la signification cryptée et/ou la valeur cryptée au bloc fonctionnel non-sécurisé (7) par le biais du dispositif de transmission (13) et
le bloc fonctionnel non-sécurisé (7) est conçu pour transmettre la signification cryptée et/ou la valeur cryptée par le biais de la première interface (9).

4. Appareil électrique (2) selon l'une des revendications 1 à 3, **caractérisé en ce que** le dispositif de transmission (13) peut être activé et désactivé et **en ce que** le bloc fonctionnel sécurisé (6) est conçu pour activer et désactiver le dispositif de transmission (13).

5. Appareil électrique (2) selon l'une des revendications 1 à 4, **caractérisé en ce que** le dispositif fonctionnel (5) comporte un deuxième dispositif d'interface (11) et **en ce que** le deuxième dispositif d'interface (11) est disposé dans le bloc fonctionnel sécurisé (6).

6. Appareil électrique (2) selon la revendication 5, **caractérisé en ce que** le bloc fonctionnel sécurisé (6) est conçu pour recevoir la clé par le biais du deuxième dispositif d'interface (11) et la mémoriser dans le bloc fonctionnel sécurisé (6).

7. Appareil électrique (2) selon l'une des revendications 1 à 6, **caractérisé en ce que** l'appareil électrique (2) est un appareil de terrain.

8. Appareil électrique (2) selon la revendication 7, **caractérisé en ce que** le dispositif fonctionnel (5) comporte un dispositif de mesure (12) et le dispositif de mesure (12) est disposé dans le bloc fonctionnel sécurisé (6).

9. Système de mémorisation (1) comprenant un appareil électrique (2) selon l'une des revendications 1 à 8 et un appareil de mémorisation non-sécurisé (3), **caractérisé en ce que**
l'appareil électrique (2) et l'appareil de mémorisation (3) sont reliés l'un à l'autre par le biais du premier dispositif d'interface (9) pour échanger des informations, et
l'appareil de mémorisation (3) est conçu pour mémoriser la paire de valeurs ou la signification et/ou la valeur.
